# EUROPEAN PATENT APPLICATION

(11) **EP 4 699 930 A1**
(43) Date of publication of application: **25.02.2026**
(21) Application number: 25196398.9
(22) Date of filing: 18.08.2025
(51) Int. Cl.: B64C 1/06, B64C 1/40

(54) **HUMIDITY DRAINING CONCEPT OF INSULATION MATERIAL**

(30) Priority: 21.08.2024 LU 103358
(71) Applicant: AIRBUS Operations GmbH, 21129 Hamburg (DE)
(72) Inventor: MACHUNZE, Wolfgang, 82024 Taufkirchen (DE); BONACCURSO, Elmar, 82024 Taufkirchen (DE); HELWIG, Andreas, 82024 Taufkirchen (DE); WITTE, Tassilo, 21129 Hamburg (DE); KAYSSER, Simon, 21129 Hamburg (DE); RITSCHEL, Maximilian, 21129 Hamburg (DE)

(57) **Abstract**

The present disclosure relates to an insulating bag (100) for an aircraft. The insulating bag (100) comprises an insulation material (150) and a packaging foil (110) covering the insulation material (150), and a drainage (130) arranged in a bottom region of the insulating bag and a discharge (132) fluidly connected to the drainage (130) and piercing through the packaging foil (110) in the bottom region of the insulating bag (100). Further disclosed is an aircraft having such insulating bag (100).

## Description

The present disclosure generally relates to an insulating bag for an aircraft, and an aircraft comprising the same. Particularly, the present disclosure relates to an insulating bag including a packaging foil, a drainage at a bottom region of the insulating bag, and a discharge piercing through the packaging foil. The present disclosure further relates to an aircraft including a plurality of such insulating bags.

A conventional insulation used in an aircraft comprises glass wool or a similar porous material, that is arranged, for example, at an outer primary structure of the fuselage of the aircraft, in order to insulate the interior cabin of the aircraft from the ambient environment.

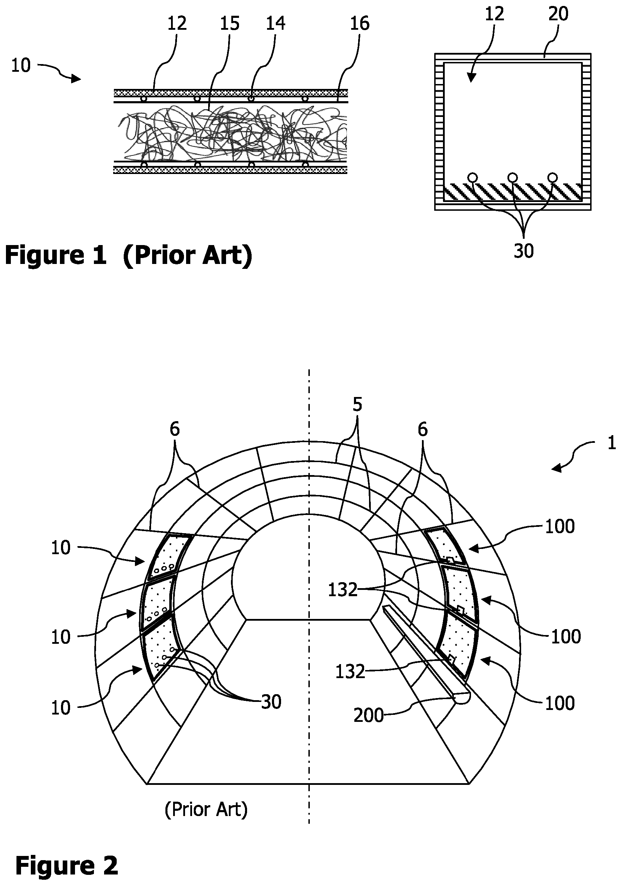

Figure 1 schematically illustrates a cross-section and front view of an exemplary bagged insulation 10, including a porous material 15, such as glass wool, which is wrapped by a foil 12. In order to avoid that the foil 12 tears apart or easily slits, and the glass wool 15 would fall out, the foil 12 is reinforced with fibres 14 bonded to the foil 12 with an adhesive film 16. The front and back foils 12 are adhered to one another, for example, by gluing or welding, along a circumference 20 to form the bag 10.

Furthermore, such insulation 10 is regularly exposed to humidity, particularly as a dew point is usually located inside of the porous material 15, when the aircraft flies at a high-altitude, i.e. the temperature in the ambient environment is relatively low compared to the temperature inside of the aircraft. In addition, the passengers present in the aircraft exhale or transpire a large amount of water. Thus, water will collect in the porous material 15. In order to remove the water, holes 30 (see front view to the right in Figure 1) are made into the reinforced foil 12.

However, as illustrated in Figure 1, even after drying the insulation 10, water may remain in a bottom region below the holes 30 (indicated as shaded area), or at least it will take longer to dry the porous material 15. In case the water is not fully removed from the porous material 15 before the next flight, additional weight due to the water is to be carried by the aircraft, which increases fuel consumption and CO₂ emission of the aircraft.

It is therefore an object of the present disclosure to provide an improved insulation for an aircraft avoiding the above drawbacks.

This object is solved by the present invention as defined in the independent claims. Preferred embodiments are defined by the dependent claims.

According to a first aspect to better understand the present disclosure, an insulating bag for an aircraft comprises an insulation material, and a packaging foil covering the insulation material. The insulating bag further comprises a drainage arranged in a bottom region of the insulating bag, and a discharge fluidly connected to the drainage and piercing through the packaging foil in the bottom region of the insulating bag.

Thus, any water collecting inside the packaging foil can be removed at any time via the discharge. The arrangement of the drainage in the bottom region as well as the discharge that pierces through the packaging foil in the bottom region of the insulating bag avoids that water can collect in the bottom region, as it was the case with conventional insulation (see for example Figure 1). In addition, instead of a plurality of holes through which humidity can also enter the insulation material, only a discharge pierces through the packaging foil.

The reduced amount of water that may collect inside of the insulating bag reduces the weight of the insulating bag during flight. Furthermore, the time required to dry the insulation material is reduced, due to better draining capabilities.

As a mere example, the discharge can pierce through the packaging foil at a circumferential seam or weld of the front and back packaging foil. Thus, there is no pocket in the bottom region, where water can collect, and the overall amount of water collecting in the bag can be significantly reduced. For instance, the discharge can pierce through the front packaging foil.

In an implementation variant, the drainage and/or the discharge is at least partially formed by the packaging foil. For instance, a portion of the packaging foil in the bottom region of the insulating bag is formed to allow water to collect and drain towards the discharge. Such form of the packaging foil can include a slant or inclined portion in the bottom region with the lowest point at the discharge. Thus, the drainage and/or discharge can be integrated into the packaging foil.

Terms such as "bottom" and "lowest point" are to be understood as defining regions and directions of the insulating bag when it is installed in the aircraft. Usually, insulating bags are installed in a manner that one portion of the insulating bag is arranged lower than other (top) portions. Thus, water collecting inside of the insulating bag can run solely by gravity towards the bottom region and, hence, towards the discharge.

In an implementation variant, the drainage and/or the discharge can be made from the same material as the packaging foil. This allows integrating the drainage and/or discharge into the packaging foil or at least to connect the drainage and/or discharge to the packaging foil, such as by adhering or welding. In such case, the drainage and/or discharge can be achieved by providing additional material, so that the packaging foil is thickened and, for example, is more rigid than in the remaining regions of the packaging foil.

In an implementation variant, the material of the packaging foil can be treated to change its stiffness or rigidity. As a mere example, in the regions forming the drainage and/or discharge, the packaging foil is treated to be stiffer or more rigid compared to the remaining portions of the packaging foil. Such treatment may include the addition of fibres, thermal treatment to harden the packaging foil material, etc..

Furthermore, the fibres can be made from the same material, such as a thermoplastic polymer, as the packaging foil, i.e., as the drainage and/or discharge.

Moreover, while adhering or welding the front and back packaging foils at a circumference of the insulating bag, the drainage and/or discharge can be simultaneously formed.

In an implementation variant, the packaging foil can include a doubler, an extra layer of packaging foil and/or additional fibre reinforcement in a region of the drainage and/or the discharge. For instance, around the discharge, where the packaging foil is pierced (or has a hole), such reinforcing structure can be provided. Thus, where the packaging foil is at risk of tearing, the packaging foil is reinforced by the doubler, extra layer of packaging foil and/or additional fibre reinforcement in the foil.

In an implementation variant, at least a portion of the drainage and/or at least a portion of the discharge can be rigid. Such rigid portion or complete rigid drainage and/or discharge can be achieved by providing a separate drainage and/or discharge made from a rigid material. Otherwise, the packaging foil material can be stiffened or can be made more rigid as explained above.

In an implementation variant, said at least a portion of the drainage and/or said at least a portion of the discharge can form a gutter or tube. A gutter can be considered as representing half of a tube or another cross-sectional portion of a tube. The open side of the gutter faces towards a top portion of the insulating bag, while the closed portion of the gutter is pointing to the bottom region of the insulating bag or may even form the bottom region of the insulating bag. The discharge can be formed by a tube piercing through the packaging foil, i.e. creating a fluid connection between the exterior of the insulating bag and the drainage inside the bag.

In an implementation variant, the insulating bag can further comprise a closure arranged in the discharge, and an actuator configured to open and/or close the closure. Thus, even if water collects inside the insulating bag and, for example, in the drainage, the water may not be released, if the closure is in the closed position.

The closure may be configured to achieve the open or closed position with or without influence of the actuator. Thus, the actuator may only be configured to open or close the closure, while the other state (or open state) of the closure is achieved by itself. For instance, a biasing closure may be provided. On the other hand, the actuator can be configured to bring the closure into the open position, so that a fluid connection between the interior of the insulating bag, particularly the drainage, and the exterior of the insulating bag can be achieved in a controlled manner.

In an implementation variant, the actuator can be a passive actuator configured to open and/or close the closure when a temperature or moisture or pressure difference at the actuator exceeds a predefined threshold. For instance, humidity and water will most likely collect in the insulating bag due to a large temperature difference between the exterior and interior of the aircraft, and the insulating bag in general will be colder. Thus, the actuator may be configured to close the closure at a temperature below the predefined threshold and to open it again above the predefined threshold. As a mere example, if the aircraft flies at a high altitude, where the ambient is cold, water may collect inside of the insulating bag, but can be released during or after landing of the aircraft, i.e., if the temperature in the environment and, hence, at the insulating bag, raises.

Likewise, if a certain amount of water is collected in the drainage (and also in the discharge), the actuator may get wet and opens the closure. Thus, water can be collected and drained from the insulating bag even during condensation of water inside of the insulating bag.

Further likewise, if a pressure reduces (compared to a standard pressure (such as 1 bar)), which is usually the case if the aircraft flies at a high altitude, the actuator may be configured to close the closure. Once the aircraft descends and the pressure in the aircraft increases, the actuator may be configured to open the closure and release the collected water, such as during or after landing of the aircraft.

It is to be understood that combinations of the above described actuators may be employed, such as an actuator that is configured to open the closure if a pressure increases above a predefined pressure threshold and a temperature increases above a predefined temperature threshold.

In an implementation variant, the actuator can include hydromorphic structures. As a mere example, the hydromorphic structures can change their form and/or size to allow or block water from flowing therethrough, like pores in a skin. For instance, in case water or humidity inside the bag exceeds a predefined level, renders the hydromorphic structures to change in order to allow water to pass through the packaging foil. Thereby, the water collected inside the bag can drain and/or discharge. Furthermore, air can enter through the foil, so that a ventilation of the insulation material is achieved. On the other hand, the hydromorphic structures will close (like pores), if the interior and/or exterior conditions (humidity and/or temperature) changes to such an extent that water/humidity would enter the insulation material.

As a mere example, such hydromorphic structures can be implemented in form of micro capillaries. These capillaries act like a plurality of channels through the packaging foil, which are to small (thin in diameter) h allow water to pass through. Only when affected by temperature and/or humidity, the material will change and widens the capillaries (channels), allowing drop(let)s of water to pass through.

Another example can be formed by y bi-layer structure, which deforms with increasing humidity until capillaries and/or channels and/or through holes will open. Once the bi-layer foil structure dries, the hydromorphic structures close again.

In an implementation variant, the actuator can be an active actuator configured to open and/or close the closure, when the actuator is energised. For instance, the actuator can be a motorised valve, motorised flap, motorised diaphragm or the like. The actuator may be an electric actuator, a pneumatic actuator, a hydraulic actuator, a piezo element, or the like. The actuator may be controlled, for example, by a controller, to open and close the closure.

In an implementation variant, the packaging foil can be made from a thermoplastic polymer, preferably from a polyether ether ketone, PEEK, polyethylene terephthalate, PET, polypropylene, PP, polycarbonate, PC, polyetherimide, PEI, polyethylene, PE, or polyamide, PA. Particularly PE and PA have certain transmissive capabilities with respect to water, as they have an increasing transmissive rate with increasing humidity.

In an implementation variant, for a packaging foil with a thickness of approximately 100 µm, the PEEK can have a water vapour transmission rate of approximately 3.2 to 4.6 g/m²d, preferably 3.7 to 4.1 g/m²d, most preferably 3.9 g/m²d. Likewise, for a packaging foil with a thickness of approximately 100 µm, the PET can have a water vapour transmission rate of approximately 1.5 to 2.5 g/m²d, preferably 1.8 to 2.2 g/m²d, and most preferably 2 g/m²d. Thus, the amount of water entering the insulating bag is reduced due to the material and thickness of the packaging foil.

In an implementation variant, the packaging foil can have a surface comprising a microstructure promoting water drainage and/or can have a hydrophilic surface. As a mere example, the portion of the packaging foil having hydrophilic capabilities can be arranged in the bottom region of the bag. Furthermore, the hydrophilic portion/surface can be on an interior side of the bag and also covers the discharge. Thus, the hydrophilic surface runs from inside to outside, so that water is "collected" inside the bag and transported to the outside. The hydrophilic surface, hence, sucks the water out of the bag.

In an implementation variant, the microstructure promoting water drainage and/or the hydrophilic portion can be provided by treating the surface with a hydrophilic substance (e.g., silicone nanofilaments) and/or laser and/or oxygen. For instance, a nanostructure is formed on the respective surface of the foil, such as spherical structures or flaky or scaly structures on the surface (like on a Lotus leaf).

In an implementation variant, the packaging foil can comprise a thermoplastic polymer foil and a fibre reinforcement made from the same thermoplastic polymer as the foil. Thus, the packaging foil is reinforced and provides a high resilience against mechanical influence, for example, it has a high tensile strength for handling and installation as well as a resilience against mechanical wear during operation of the aircraft.

In an implementation variant, the fibre reinforcement may be configured to be shaped, so that it forms the drainage and/or discharge.

According to a second aspect to better understand the present disclosure, an aircraft comprises a plurality of frames, a plurality of stringers forming, together with the plurality of frames, a coffering, and a plurality of insulating bags of the first aspect or one or more of its variants. Specifically, at least one of the plurality of insulating bags is arranged in a panel of the coffering. Thus, the grid defined by the frames and stringers is filled with insulating bags, so that (the interior of) the primary structure of the aircraft (i.e., the fuselage) is continuously insulated.

In an implementation variant, the aircraft can further comprise a drainage system configured to collect water drained from each discharge. Such drainage system can be achieved by gutters, tubes, pipes or the like.

Alternatively or additionally, interior panels, such as linings, sidewalls, exterior walls of monuments, etc., can be arranged in such a manner that water flowing out of the discharge is guided via the interior panel towards a water collecting point. In other words, the interior panels can form part of the drainage system.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a cross-section and a front view of a conventional insulating component;
- Figure 2: schematically illustrates an aircraft section having conventional insulating components and insulating bags of the present disclosure;
- Figure 3: schematically illustrates a front view, and two cross-sectional views of an insulating bag of the present disclosure; and
- Figure 4: schematically illustrates details of a drainage and discharge.

In the following description, for purposes of explanation and not limitation, specific details are set forth in order to provide a thorough understanding of the present disclosure. It will be apparent to one skilled in the art that the present disclosure may be practiced in other implementations that depart from these specific details.

Figure 2 schematically illustrates an aircraft 1, particularly an aircraft section having conventional insulating components 10 (illustrated on the left-hand side of the dashed dotted line), and in comparison thereto insulating bags 100 of the present disclosure (illustrated on the right-hand side of the dashed dotted line). For clarity reasons of the drawing, only three insulating bags 100 are illustrated. It is to be understood that the entire primary structure can be covered by insulating bags, so that a continuous insulation can be provided.

The aircraft 1 comprises a fuselage including, amongst others, a plurality of frames 5 and a plurality of stringers 6 arranged in a grid. As a mere example, the frames 5 are arranged in a cross-sectional plane of the aircraft fuselage 1, while the stringers 6 run in a longitudinal direction of the aircraft 1. It is to be understood that an outer skin (not illustrated) is arranged at the exterior sides of the frames 5 and stringers 6, which altogether form the primary structure of the aircraft 1. The outer skin being the coldest component during high altitude flights requires insulation, which can be provided in the coffering formed by the frames 5 and the stringers 6. Thus, in each panel or coffer between a pair of adjacent frames 5 and a pair of adjacent stringers 6 can be placed one or more insulating bags 100.

As can be derived from Figure 2, the conventional insulating components 10 are provided with holes 30 as explained with respect to Figure 1.

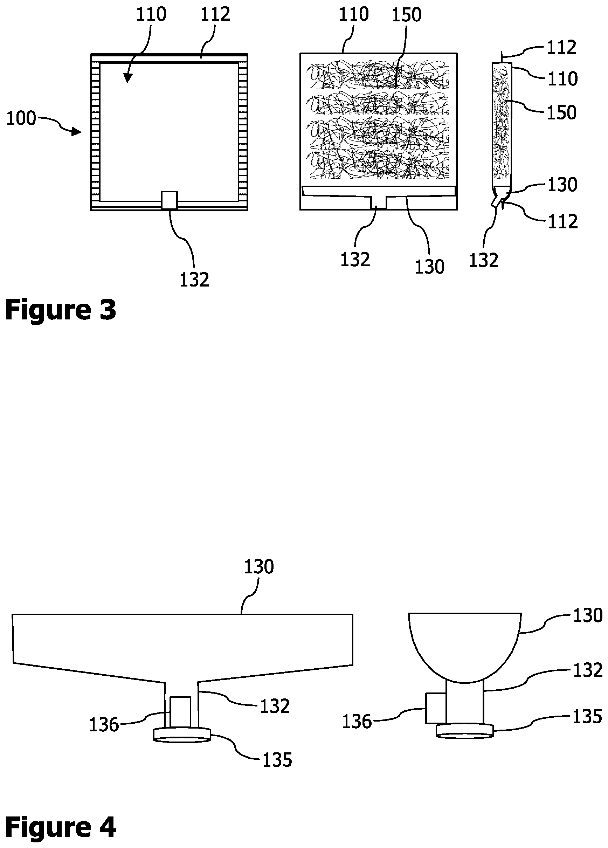

The insulating bags 100 of the present disclosure (to the right in Figure 2) each have a drainage 130 arranged in a bottom region of the insulating bag 100, and a discharge 132 fluidly connected to the drainage 130 and piercing through a packaging foil 110 (cf. Figure 3) in the bottom region of the insulating bag 100. Thus, water from each insulating bag 100, for example, developed due to condensation of humidity reaching the interior space of the insulating bag 100, can be guided into a drainage system 200.

The drainage system 200 is exemplarily illustrated as a kind of gutter in Figure 2. However, any other drainage system 200 can be employed, including interior panels, such as linings, exterior surfaces of monuments, etc., on which the water exiting a discharge 132 can flow towards a collector (not illustrated) of the drainage system 200.

The discharge 132 can be arranged and sized, so that it projects from the insulating bag to such an extent that its free end (opening to drain water) exceeds an interior edge of a stringer 6. In other words, water flowing out of the discharge 132 is not caught by a stringer 6 and, hence, the outer skin, but can be collected in a drainage system 200.

With additional reference to Figure 3, the insulating bag 100 has an insulation material 150 covered by a packaging foil 110. The insulating bag 100 can have a front and back packaging foil 110, which are adhered to one another at a circumference 112. As a mere example, at the circumference 112, the front and back packaging foil 110 can be welded, glued or otherwise adhered or integrated into one another.

Alternatively, the packaging foil 110 has a continuous cross-section, i.e. is formed as a hose. Thus, after filling the packaging foil 110 with the insulation material 150, only the top and bottom ends have to be closed, for example, by gluing or welding.

The insulating bag 100, particularly the packaging foil 110, can be made from a thermoplastic polymer. Examples of a thermoplastic polymer as are a polyether ether ketone, PEEK, and a polyethylene terephthalate, PET. Such materials can be formed to a thin foil. The packaging foil 110, for example, can have a thickness of 15 to 200 µm, preferably 100 µm.

Furthermore, for a packaging foil 110 with a thickness of approximately 100 µm, the PEEK has a water vapour transmission rate of approximately 3.2 to 4.6 g/m²d, preferably 3.7 to 4.1 g/m²d, most preferably 3.9 g/m²d, and in case of PET it has a water vapour transmission rate of approximately 1.5 to 2.5 g/m²d, preferably 1.8 to 2.2 g/m²d, and most preferably 2 g/m²d.

Alternatively or additionally, the packaging foil 110 can have a surface comprising a microstructure promoting water drainage and/or can have a surface treated with a hydrophilic component. Particularly, the interior side of the packaging foil 110 can have such surface and/or surface treatment, in order to allow water that condensates inside of the insulating bag 100 to run/flow towards the drainage 130.

In the middle of Figure 3, the front packaging foil 110 is removed, so that the insulation material 150 is visible as well as the drainage 130 and discharge 132. The drainage 130 and/or the discharge 132 can be formed at least partially by the packaging foil 110 or can be made from the same material as the packaging foil 110. The drainage 130 is configured to collect water contemplated in the insulation material 150, i.e. forms a collector of water.

In order to avoid the front and back packaging foil 110 to stick together, at least a portion of the drainage 130 and/or at least a portion of the discharge 132 can be rigid. Thus, despite the flexible characteristic of the foil 110, the bottom region of the insulating bag 100 maintains the form of the drainage 130 and discharge 132. The drainage 130 can form a gutter or a portion of a tube.

The discharge 132 further pierces through the packaging foil 110 in the bottom region of the insulating bag 100. Thus, any water collecting inside the insulating bag 100 is not only collected, but can be released from the interior of the insulating bag 100. The discharge 132 can form at least a portion of a gutter or tube. In case of a tube, the discharge 132 may be fluidly connected with a volume enclosed by the drainage 130, such as a drain or sewer.

With further reference to Figure 4, the insulating bag 100 can further comprise a closure 135 arranged in the discharge 132. The closure 135 in Figure 4 is illustrated as being arranged at the bottom end of the discharge 132. This is only one exemplary location of the closure 135. The closure 135 can likewise be arranged inside of the discharge 132 or at an intersection of the discharge 132 and the drainage 130.

Furthermore, an actuator 136 of the insulating bag 100 can be configured to open and close the closure 135. The actuator 136 can be a passive component (passive actuator) configured to open the closure 135 when a temperature or moisture or pressure difference at the actuator 136 exceeds a predefined threshold. Alternatively, the passive actuator 136 can be configured to open the closure when a temperature or moisture or pressure difference is below a predefined threshold.

A further example of a passive actuator 136 includes a hydromorphic structure that allows release of water through the closure 135, if water collects inside of the drainage 132 and stands (collects) on the closure 135. Such hydromorphic structure can act like a pore or channel, which opens at a certain level of water or humidity, and closes when it dries again. It is to be understood that such hydromorphic structure(s) can be provided also directly in the packaging foil 110.

Alternatively or additionally, the actuator 136 can be an active component (active actuator) configured to open and close the closure 135. For instance, the active actuator 136 can open the closure 135, if the actuator 136 is energised. Such active actuator 136 can include an electric element (including a motor), a pneumatic element, a hydraulic element, a piezo element or the like.

It is to be understood that the discharge 132 illustrated in Figure 4 may not be arranged vertically relative to the drainage 130. Particularly, in the right cross-sectional illustration of the drainage 130 and discharge 132 of Figure 4, the discharge 132 may alternatively be curved or bent or slanted towards the left or right in the drawing. As a mere example, this allows providing the free (open) end of the discharge 132 in a region, where the water leaving the discharge 132 can be collected.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An insulating bag (100) for an aircraft (1), comprising:
an insulation material (150); and
a packaging foil (110) covering the insulation material (150),
**characterised in that** the insulating bag (100) further comprises:
a drainage (130) arranged in a bottom region of the insulating bag, and
a discharge (132) fluidly connected to the drainage (130) and piercing through the packaging foil (110) in the bottom region of the insulating bag (100).

2. The insulating bag (100) of claim 1, wherein the drainage (130) and/or the discharge (132) is at least partially formed by the packaging foil, or
wherein the drainage (130) and/or the discharge (132) is made from the same material as the packaging foil (110).

3. The insulating bag (100) of claim 1 or 2, wherein at least a portion of the drainage (130) and/or at least a portion of the discharge (132) is rigid, and
wherein, preferably, said at least a portion of the drainage (130) and/or said at least a portion of the discharge (132) forms a gutter or tube.

4. The insulating bag (100) of one of claims 1 to 3, further comprising:
a closure (135) arranged in the discharge (132); and
an actuator (136) configured to open and/or close the closure (135).

5. The insulating bag (100) of claim 4, wherein the actuator (136) is a passive actuator configured to open or close the closure (135) when a temperature or moisture or pressure difference at the actuator (136) exceeds a predefined threshold, and
wherein, preferably, the actuator (136) includes hydromorphic structures.

6. The insulating bag (100) of claim 4, wherein the actuator (136) is an active actuator configured to open and/or close the closure (135), when the actuator (136) is energised.

7. The insulating bag (100) of one of claims 1 to 6, wherein the packaging foil (110) is made from a thermoplastic polymer, preferably from a polyether ether ketone, PEEK, or polyethylene terephthalate, PET, and
wherein preferably, for a packaging foil with a thickness of approximately 100 µm, the PEEK has a water vapour transmission rate of approximately 3.2 to 4.6 g/m²d, preferably 3.7 to 4.1 g/m²d, most preferably 3.9 g/m²d, and the PET has a water vapour transmission rate of approximately 1.5 to 2.5 g/m²d, preferably 1.8 to 2.2 g/m²d, and most preferably 2 g/m²d.

8. The insulating bag (100) of one of claims 1 to 7, wherein the packaging foil (110) has a surface comprising a microstructure promoting water drainage and/or has a surface treated with a hydrophilic component, and/or
wherein the packaging foil (110) comprises includes hydromorphic structures.

9. An aircraft (1), comprising:
a plurality of frames (5);
a plurality of stringers (6) forming, together with the plurality of frames (5), a coffering; and
a plurality of insulating bags (100) of one of claims 1 to 8, wherein at least one of the plurality of insulating bags (5) is arranged in a panel of the coffering.

10. The aircraft (1) of claim 9, further comprising:
a drainage system (200) configured to collect water drained from each discharge (132).
